# FASCICULE DE BREVET EUROPEEN

(11) **EP 2 665 617 B1**
(45) Date de publication et mention de la délivrance du brevet: **16.12.2015**
(21) Numéro de dépôt: 12700921.5
(22) Date de dépôt: 04.01.2012
(51) Int. Cl.: G01D 13/04, B60K 37/02

(54) **TABLEAU DE BORD ET METHODE D'ASSEMBLAGE D'UN TABLEAU DE BORD**
ARMATURENBRETT UND VERFAHREN ZUR MONTAGE EINES ARMATURENBRETTS
DASHBOARD AND METHOD FOR ASSEMBLING A DASHBOARD

(30) Priorité: 17.01.2011 DE 102011008712; 30.05.2011 FR 1101667
(43) Date de publication de la demande: 27.11.2013
(73) Titulaire: Johnson Controls Automotive Electronics SAS, 95892 Cergy-Pontoise Cedex (FR)
(72) Inventeur: BOX, Benoit, F-95290 L'isle Adam (FR); HENON, Fabrice, F-95800 Cergy (FR); LEROUX, Gwendoline, F-95800 Cergy (FR); DUMAS, Olivier, F-78290 Croissy sur Seine (FR)
(74) Mandataire: Schwöbel, Thilo K.
(86) Numéro de dépôt international: PCT/EP2012/000021
(87) Numéro de publication internationale: WO 2012/097961

(56) Documents cités:
- JP-A- 2003 014 508
- JP-A- 2005 181 301
- US-A1- 2007 263 374
- US-B1- 7 427 143

## Description

La présente invention concerne, d'une part, un tableau de bord, notamment pour véhicule automobile, et d'autre part, une méthode d'assemblage d'un tableau de bord pour véhicule automobile.

Plus précisément, la présente invention concerne de réaliser un tableau de bord de telle manière que l'assemblage du tableau de bord puisse se faire aisément et rapidement.

Dans l'état connu de la technique, des tableaux de bord pour véhicule automobile sont connus comprenant un cadran, une boîte à lumière, une aiguille et une carte imprimée, l'aiguille étant entrainée en rotation autour d'un axe de rotation par un élément moteur et localisée derrière le cadran, l'aiguille (de type coudé) comportant une première portion axiale, une deuxième portion axiale, une portion radiale et une portion d'affichage, la portion d'affichage étant visible en périphérie du cadran. De tels tableaux de bord comportant une aiguille sont connus par exemple pour afficher une valeur comme la vitesse ou d'autres grandeurs qui intéressent un conducteur d'un véhicule.

Il est également connu de prévoir des aiguilles coudées qui peuvent être entrainées en rotation autour d'un axe de rotation derrière le cadran du tableau de bord pour permettre au tableau de bord d'afficher d'autres informations à l'endroit ou aux alentours de l'axe de rotation de l'aiguille.

Selon l'art antérieur, il est difficile d'assembler l'aiguille avec le cadran et la boîte à lumière, car, de manière générale, le cadran et la boîte à lumière doivent être localisés dans un endroit entre, d'une part, la portion d'affichage de l'aiguille et, d'autre part, la portion radiale de l'aiguille. Ceci veut dire que l'aiguille coudée doit être assemblée ou attachée avec l'élément moteur à travers le cadran et à travers la boîte à lumière.

Un tableau de bord comprenant les charactéristiques du préambule de la revendication 1 est connu du document JP 2003 014508.

La présente invention à notamment pour but de palier aux inconvénients de l'art connu, et notamment ceux cités ci-dessus et à également pour but de proposer un tableau de bord de façon à rendre l'assemblage du tableau de bord plus simple et moins couteux.

Suivant l'invention, ce but est atteint par un tableau de bord pour véhicules automobiles, comprenant
-- un cadran,
-- une boîte à lumière
-- une aiguille, et
-- une carte imprimée,
l'aiguille étant entrainée en rotation, par un élément moteur, derrière le cadran et autour d'un axe de rotation, l'aiguille comportant une première portion axiale, une deuxième portion axiale, une portion radiale, et une portion d'affichage, la portion d'affichage étant visible en périphérie du cadran, le cadran comprenant un premier évidement à travers lequel l'aiguille est enfilée, la boîte à lumière comprenant un deuxième évidement à travers lequel l'aiguille est enfilée, et les premier et deuxième évidements ayant une forme étendue et courbée, coaxiale à l'axe de rotation, et étant localisés à une distance de l'axe de rotation qui correspond à la longueur de la portion radiale de l'aiguille.

De par une telle réalisation du tableau de bord, il est avantageusement possible de réaliser l'assemblage du tableau de bord de manière plus simple et moins couteux. En prévoyant les premiers et deuxièmes évidements, il est possible selon la présente invention, de réaliser le tableau de bord, et notamment le cadran et la boîte à lumière, de manière plus stable comparé à une solution où la boîte à lumière et/ou le cadran soient, par exemple, réalisés en deux parties ou alors avec un évidement relativement grand pour permettre le mouvement de l'aiguille.

Selon l'invention le tableau de bord comprend une surface d'affichage d'un côté de la carte imprimée et que l'élément moteur est fixé sur la carte imprimée de l'autre côté de la carte imprimée, et la carte imprimée comprend un troisième évidement à travers lequel l'aiguille est enfilée.

De par une telle réalisation du tableau de bord inventif, il est avantageusement possible de réaliser également une plus grande stabilité de la carte imprimée dans le cas où le moteur soit monté du côté opposé de l'utilisateur par rapport à la carte imprimée.

Selon un autre mode de réalisation préféré du tableau de bord selon la présente invention, il est prévu que, dans une direction radiale par rapport à l'axe de rotation (c'est-à-dire dans une direction orthogonale à l'extension principale du premier évidement), la taille du premier évidement est constante le long du premier évidement sur au moins 80% de l'extension du premier évidement (de préférence au moins 90%), que, dans une direction radiale par rapport à l'axe de rotation (c'est-à-dire dans une direction orthogonale à l'extension principale du deuxième évidement), la taille du deuxième évidement est constante le long du deuxième évidement sur au moins 80% de l'extension du deuxième évidement (de préférence au moins 90%), et/ou que, dans une direction radiale par rapport à l'axe de rotation (c'est-à-dire dans une direction orthogonale à l'extension principale du troisième évidement), la taille du troisième évidement est constante le long du troisième évidement sur au moins 80% de l'extension du troisième évidement (de préférence au moins 90%).

De par une telle réalisation du tableau de bord, il est avantageusement possible de minimiser l'effet de réduire la stabilité du tableau de bord lié à l'existence du premier, deuxième et/ou troisième évidement.

Selon encore un autre mode de réalisation préféré du tableau de bord selon la présente invention, il est prévu que le deuxième évidement comprend, le long de l'extension principale du deuxième évidement, un premier agrandissement, le deuxième évidement ayant, à l'endroit du premier agrandissement, une taille agrandie dans une direction radiale par rapport à l'axe de rotation.

Selon encore un autre mode de réalisation préféré du tableau de bord selon la présente invention, il est prévu que le troisième évidements comprend, le long de l'extension principale du troisième évidement, un deuxième agrandissement, le troisième évidement ayant, à l'endroit du deuxième agrandissement, une taille agrandie dans une direction radiale par rapport à l'axe de rotation.

De par une telle réalisation du tableau de bord, il est avantageusement possible de réaliser une plus grande facilité de montage et d'assemblage du tableau de bord, notamment de l'aiguille avec le cadran et la boîte à lumière.

Un autre perfectionnement préféré de l'invention réside dans le fait que le deuxième évidement comprend un bord radialement intérieur et un bord radialement extérieur, et que le premier agrandissement élargit le bord radialement extérieur du deuxième évidement et/ou le bord radialement intérieur du deuxième évidement.

Encore un autre perfectionnement préféré de l'invention réside dans le fait que le troisième évidement comprend un bord radialement intérieur et un bord radialement extérieur, et que le deuxième agrandissement élargit le bord radialement extérieur du troisième évidement et/ou le bord radialement intérieur du troisième évidement.

De par une telle réalisation, il est possible selon la présente invention de rendre l'assemblage du tableau de bord, notamment, l'assemblage de l'aiguille avec le cadran et la boîte à lumière plus facile à l'aide de prévoir le premier agrandissement et/ou le deuxième agrandissement.

Selon encore un autre mode de réalisation préféré du tableau de bord selon la présente invention, il est prévu que l'aiguille comprend un contrepoids.

Un autre objet de la présente invention concerne une méthode d'assemblage d'un tableau de bord pour véhicules automobiles, le tableau de bord comprenant
-- un cadran,
-- une boîte à lumière
-- une aiguille, et
-- une carte imprimée,
l'aiguille étant entrainée en rotation, par un élément moteur, derrière le cadran et autour d'un axe de rotation, l'aiguille comportant une première portion axiale, une deuxième portion axiale, une portion radiale, et une portion d'affichage, la portion d'affichage étant visible en périphérie du cadran, le cadran comprenant un premier évidement, la boîte à lumière comprenant un deuxième évidement, les premier et deuxième évidements ayant une forme étendue et courbée, coaxiale à l'axe de rotation, et étant localisés à une distance de l'axe de rotation qui correspond à la longueur de la portion radiale de l'aiguille,
la méthode d'assemblage comprenant une étape pendant laquelle l'aiguille est enfilée à travers le premier évidement et à travers le deuxième évidement.

De par une telle réalisation de l'assemblage du tableau de bord, il est avantageusement possible d'assembler le tableau de bord de manière plus simple et, par conséquent, de manière impliquant des coûts réduits.

Le tableau de bord selon la présente invention et la méthode d'assemblage d'un tableau de bord selon la présente invention ont, notamment, l'avantage de faciliter l'assemblage du tableau de bord, car l'aiguille qui est une aiguille coudée peut être attachée avec l'élément moteur en tant que pièce unique, c'est-à-dire une seule pièce qui représente l'aiguille peut être montée ou attachée directement à l'élément moteur sans d'autres pièces de l'aiguille et, par conséquent, sans d'autres étapes d'assemblage qui se réfèrent à l'aiguille ou à l'assemblage de l'aiguille.

L'aiguille comprend une première portion axiale qui sert d'élément de couplage entre l'aiguille et l'élément moteur. Par ailleurs, l'aiguille comporte une portion radiale qui s'étend radialement de la première portion axiale par rapport à l'axe de rotation, une deuxième portion axiale et une portion d'affichage. La boîte à lumière comprend une unité d'éclairage avec des sources de lumière. Un cadran est typiquement attaché à la boîte à lumière. Les premier et deuxième évidements ou les premier, deuxième et troisième évidements sont des évidements en forme étendue et courbée qui décrivent (au moins) un demi-arc de cercle pour permettre à l'aiguille de réaliser le mouvement rotatif autour de l'axe de rotation. A l'aide du premier agrandissement ou à l'aide des premier et deuxième agrandissements, il est possible selon la présente invention que l'aiguille peut être simplement et efficacement être attachée à l'élément moteur du tableau de bord inventif et néanmoins un assemblage simple et peu coûteux est possible.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

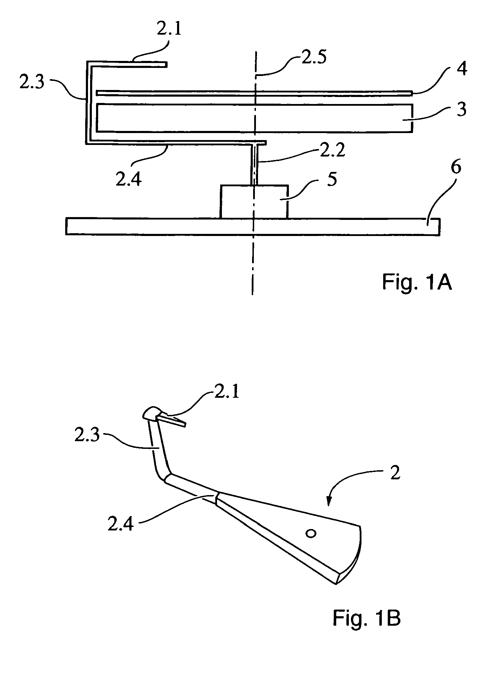

la figure **1A** est une vue schématique de coté d'un tableau de bord,
la figure **1** **B** est une vue schématique de perspective d'une aiguille coudée,
la figure **1C** est une vue schématique de perspective d'un cadran pour un tableau de bord,
la figure **1D** est une vue schématique sur une boîte à lumière pour un tableau bord.
la figure **1E** est une vue schématique sur une carte imprimée pour un tableau de bord selon la présente invention,
la figure 2A est une vue schématique de coté d'un tableau de bord,
la figure 2B est une vue schématique de perspective d'une aiguille coudée,
la figure 2C est une vue schématique de perspective d'un cadran pour un tableau de bord selon la présente invention,
la figure 2D est une vue schématique sur une boîte à lumière pour un tableau bord selon la présente invention,
la figure 2E est une vue schématique sur une carte imprimée pour un tableau de bord selon la présente invention,
la figure 3A est une vue schématique de coté d'un tableau de bord selon une première variante,
la figure 3B est une vue schématique de perspective d'une aiguille coudée,
la figure 3C est une vue schématique de perspective d'un cadran pour un tableau de bord selon la première variante selon la présente invention,
la figure 3D est une vue schématique sur une boîte à lumière pour un tableau bord selon la première variante selon la présente invention,
la figure 3E est une vue schématique sur une carte imprimée pour un tableau de bord selon la première variante selon la présente invention,
la figure 4A est une vue schématique de coté d'un tableau de bord selon la deuxième variante,
la figure 4B est une vue schématique de perspective d'une aiguille coudée,
la figure 4C est une vue schématique de perspective d'un cadran pour un tableau de bord selon la présente invention,
la figure 4D est une vue schématique sur une boîte à lumière pour un tableau bord selon la deuxième variante selon la présente invention,
la figure 4E est une vue schématique sur une carte imprimée pour un tableau de bord selon la deuxième variante selon la présente invention.

### DESCRIPTION DES DESSINS

La figure 1A montre schématiquement la structure de principe d'un tableau de bord 1, notamment un tableau de bord pour un véhicule automobile, par exemple, avec un compteur de vitesse comprenant une aiguille 2, une boîte à lumière 3 et un cadran 4.

L'aiguille 2 est notamment réalisée en tant qu'aiguille coudée et comprend une première portion axiale 2.2, une portion radiale 2.4, une deuxième portion axiale 2.3 et une portion d'affichage 2.1. La portion d'affichage 2.1 de l'aguille 2 est la pointe de l'aiguille qui peut être vue par un utilisateur du tableau de bord 1. L'aiguille 2 est attachée à un élément moteur 5 pour entraîner l'aiguille 2 en rotation autour d'un axe de rotation 2.5. Entre la première portion axiale 2.2 et la portion d'affichage 2.1, l'aiguille 2 comprend la deuxième portion axiale 2.3 et la portion radiale 2.4 qui sont notamment coudées l'une par rapport à l'autre et forment notamment un angle de 90°. Par ailleurs, la portion d'affichage 2.1 forme notamment un angle de 90°. Par ailleurs, la portion d'affichage 2.1 est également coudée par rapport à la deuxième portion axiale 2.3 de l'aiguille 2 pour former l'aiguille 2 en tant qu'aiguille coudée. La portion d'affichage 2.1 de l'aiguille et la portion radiale 2.4 de l'aiguille 2 s'étendent quasiment parallèlement l'une de l'autre et sont séparées par la deuxième portion axiale 2.3, la séparation de la portion d'affichage 2.1 et la portion radiale 2.4 correspondant notamment à la taille (ou à la longueur) de la deuxième portion axiale 2.3. La première portion axiale 2.2 de l'aiguille 2 est notamment également coudée d'un angle de 90° par rapport à la portion radiale 2.4 de l'aiguille 2 et s'étend notamment de manière parallèle à l'axe de rotation 2.5 et parallèle à la deuxième portion axiale 2.3. La première portion axiale 2.2 de l'aiguille 2 sert notamment d'élément de couplage de l'aiguille 2 avec l'élément moteur 5.

L'élément moteur 5 est notamment prévu en tant qu'élément moteur pas-à pas pour permettre un positionnement simple et efficace de l'aiguille 2 (en rotation). Par exemple, la première portion axiale 2.2 peut être attachée à l'élément moteur par l'intermédiaire d'un élément de couplage de l'élément moteur ou par l'intermédiaire de l'arbre de l'élément moteur.

L'élément moteur 5 est attaché sur une carte imprimée 6. Dans l'exemple représenté dans la figure 1A, l'élément moteur 5 est attaché sur le côté de la carte imprimée 6 qui est orienté vers la boîte à lumière 3 et le cadran 4. Dans une réalisation alternative du tableau de bord selon la présente invention, il est également possible de positionner l'élément moteur 5 de l'autre côté de la carte imprimée 6, c'est-à-dire l'élément moteur 5 est attaché à la carte imprimée 6 sur son côté opposé à la boîte à lumière 3 et au cadran 4. L'élément moteur 5 entraîne l'aiguille 2 en rotation autour de l'axe de rotation 2.5. L'axe de rotation 2.5 est notamment prévu de manière orthogonale au plan d'extension principale de la carte imprimée 6 qui est généralement parallèle au plan d'extension principale de la boîte à lumière 3 et du cadran 4.

La valeur de la grandeur affichée par l'intermédiaire de l'aiguille 2 est indiquée par la position angulaire de l'aiguille 2.

Une telle aiguille coudée 2 ne requiert pas la zone médiane (aux alentours de l'axe de rotation 2.5) de la surface visible du cadran 4. Ainsi, un utilisateur du tableau de bord, selon la présente invention, peut voir une information affichée dans cette portion ou région médiane du tableau de bord, par exemple, une information affichée par l'intermédiaire d'un élément d'affichage matriciel.

Le cadran 4 comprend les valeurs de la grandeur affichée par l'aiguille 2. Le cadran 4 est notamment réalisé par l'intermédiaire d'une pièce en matière plastique, le cadran étant notamment thermoformé et la matière plastique étant notamment thermoformable. Par ailleurs, il est préféré selon la présente invention que le cadran 4 et la boîte à lumière sont attachés l'un à l'autre par l'intermédiaire d'éléments de clipage ou de verrouillage. Le matériau plastique du cadran 4 est de préférence transparent avant d'être imprimé ou couvert par une feuille décorative. Un matériau approprié transparent est, par exemple, le polycarbonate.

Pour illuminer le cadran 4, la boîte à lumière 3 est positionnée entre la portion radiale 2.4 de l'aiguille 2 et le cadran 4, et notamment parallèlement au cadran 4.

La boîte à lumière 3 comprend un élément d'attachement 3.1 ainsi qu'un certain nombre d'exclusions ou d'évidements 3.2 pour positionner et attacher des sources de lumière qui ne sont pas, elles-mêmes, représentées dans les figures. La boîte à lumière 3 est notamment réalisée en un matériau isolant électriquement, notamment une matière plastique.

Les figures 1 B à 1 E montrent des vues schématiques de perspective de l'aiguille 2, du cadran 4, de la boîte à lumière 3 et de la carte imprimée 6.

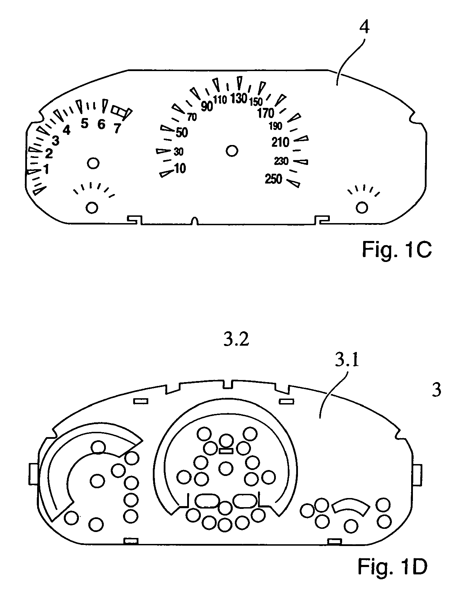

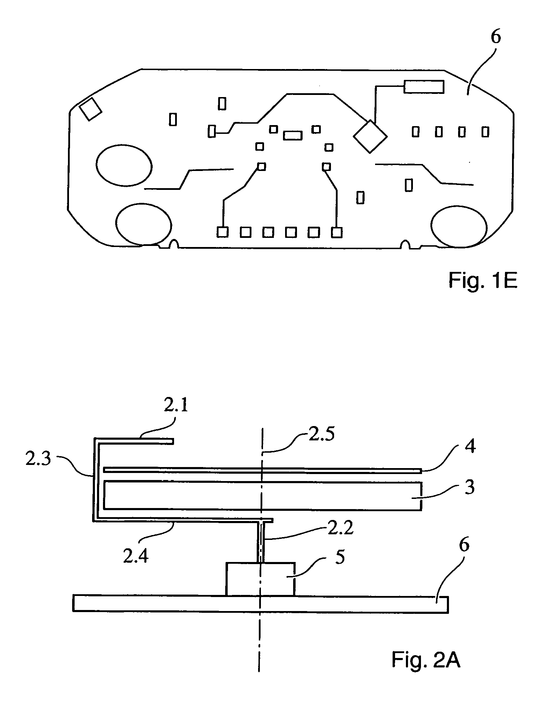

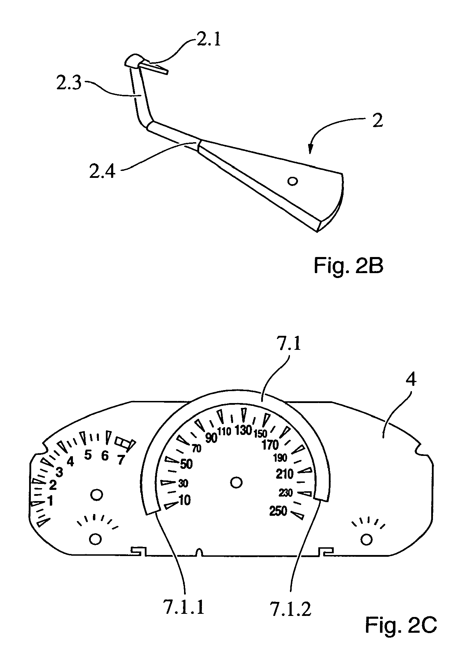

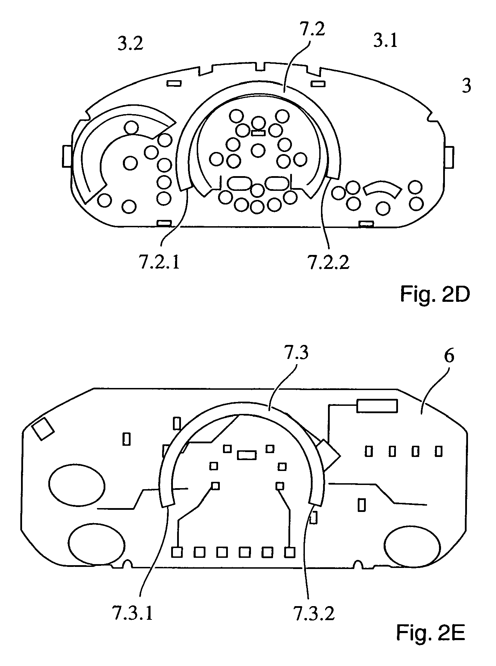

Dans la figure 1, notamment le cadran 4, la boîte à lumière 3 et la carte imprimée 6 sont représentés sans évidements pour le guidage de l'aiguille 2. La figure 2A montre le tableau de bord selon la figure 1A. La figure 2B montre l'aguille 2 selon une vue de perspective selon la figure 1 B. Les figures 2C à 2E montrent le cadran 4, la boîte à la lumière 3 ainsi que la carte imprimée 6 avec un premier évidement 7.1 réalisé dans le cadran 4, un deuxième évidement 7.2 réalisé dans la boîte à lumière 3 et un troisième évidement réalisé dans la carte imprimée 6. Les premier, deuxième et troisième évidements 7.1, 7.2, 7.3 sont réalisés, quant à leur forme, de manière égale ou similaire, notamment en forme étendue et courbée selon un arc de cercle concentrique à l'axe de rotation. Les premier, deuxième et troisième évidements 7.1, 7.2, 7.3 sont notamment réalisés dans une région éloignée de l'axe de rotation 2.5, c'est-à-dire radialement vers l'extérieur sur le cadran 4. Le premier évidement 7.1 comprend un premier boutoir 7.1.1 et un deuxième boutoir 7.1.2. Le deuxième évidement 7.2 comprend un premier boutoir 7.2.1 et un deuxième boutoir 7.2.2. Le troisième évidement 7.3 comprend un premier boutoir 7.3.1 et un deuxième boutoir 7.3.2. Entre les boutoirs des évidements 7.1, 7.2, 7.3, les évidements forment, en arc de cercle, au moins un demi-cercle autour de l'axe de rotation 2.5, notamment avec une largueur, perpendiculaire à leur extension principale, qui est constante..

Le troisième évidement 7.3 dans la carte imprimée 6 est réalisée seulement si l'élément moteur 5 est positionné du côté opposé de la carte imprimée 6 par rapport à la boîte à lumière 3 et au cadran 4. Dans une telle configuration du tableau de bord, l'aiguille 2 doit aussi passer à travers le plan d'extension principale de la carte imprimée 6.

Lors de l'assemblage du tableau de bord, il est notamment prévu dans une première étape d'attacher l'aiguille 2 avec l'élément moteur 5 qui est attachée à la carte imprimée 6. La boîte à lumière ainsi que le cadran 4 sont montés après dans l'espace entre la portion d'affichage 2.1 de l'aiguille 2 et la portion radiale 2.4 de l'aiguille par enfilage de l'aiguille 2 à travers au moins le premier évidement 7.1 et le deuxième évidement 7.2.

Dans cette situation, il s'est avéré difficile de réaliser l'assemblage du tableau de bord car l'élément de fixation 3.1 de la boîte à lumière 3 a une certaine épaisseur ou hauteur qui, ensemble avec le matériau de la boîte à lumière 3, réduit la flexibilité de la boîte à lumière 3. Pour enfiler l'aiguille 2 dans le premier évidement 7.1 et le deuxième évidement 7.2, des mouvements spéciaux sont nécessaires car la carte imprimée 6 montre également une flexibilité réduite et il existe le danger que l'aiguille soit endommagée lors de cette opération d'assemblage.

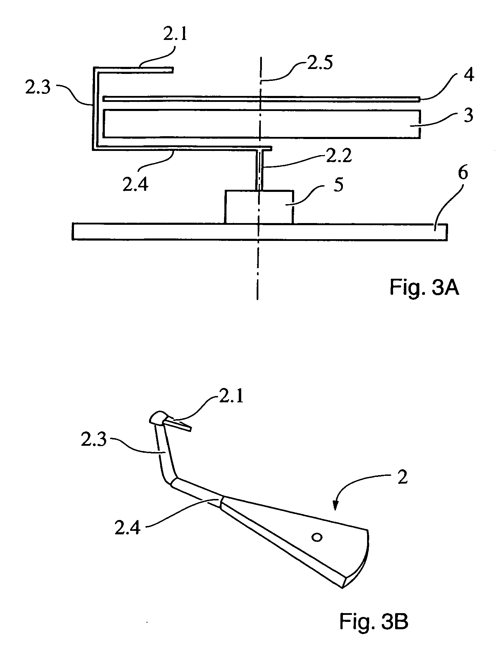

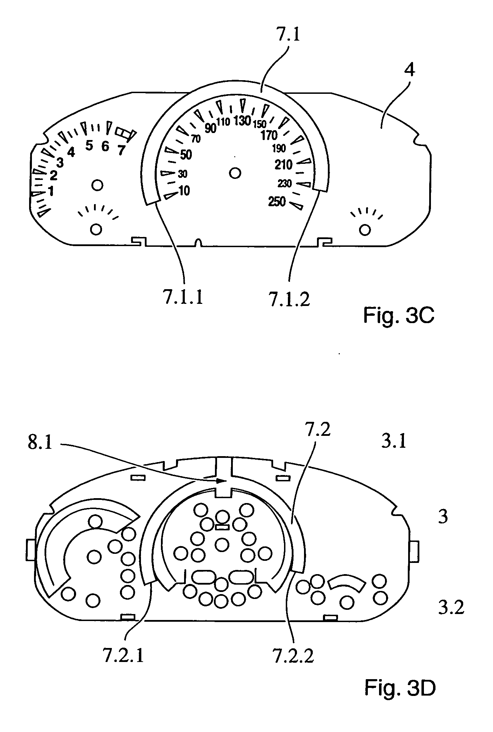

Les figures 3A à 3E montrent le tableau de bord partiellement dans son état assemblé ainsi que l'aiguille 2, le cadran 4, la boîte à lumière 3 et la carte imprimée 6 dans une réalisation alternative de la présente invention. L'aiguille représentée dans la figure 3B correspond à l'aiguille représentée dans les figures 1 B et 2B.

La boîte à lumière 3 comprend dans le deuxième évidement 7.2 un premier agrandissement 8.1. La carte imprimée 6 comprend dans le troisième évidement 7.3 un deuxième agrandissement 8.2. Le premier agrandissement 8.1 et le deuxième agrandissement 8.2 sont notamment réalisés similaires ou identiques quant à leur forme. Le premier et deuxième agrandissement 8.1, 8.2 sont notamment prévus en forme de rainure ou de fente qui agrandissent le deuxième et troisième évidement 7.2, 7.3 sur une partie de son extension le long de l'arc en cercle qui correspond par exemple'à 2% ou 5% de l'extension totale du premier, deuxième et/ou troisième évidement.

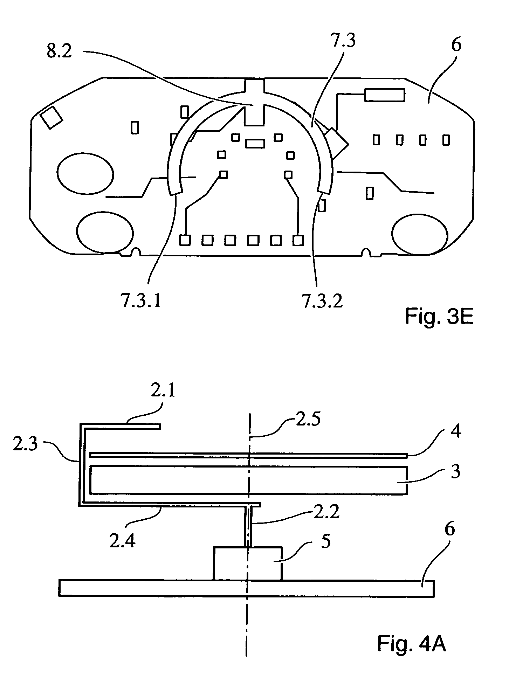

Dans les figures 3D et 3E, il est visible que les agrandissements 8.1, 8.2 augmentent la largueur du deuxième et troisième évidement 7.2, 7.3 au bord radialement intérieur du deuxième et troisième évidement 7.2, 7.3 ainsi qu'au bord radialement extérieur deuxième et troisième évidement 7.2, 7.3. Le deuxième agrandissement 8.2 de la carte imprimée 6 n'est pas représenté dans la figure 3a. Par ailleurs, le premier agrandissement 8.1 de la boîte à lumière 3 n'est pas représenté complètement dans la figure 3a, car la boîte à lumière 3 ainsi que cadran 4 ne dépassent pas, dans cette représentation, la deuxième portion axiale 2.3 de l'aiguille, mais l'endroit du premier agrandissement 8.1 et visible dans la figure3a.

Les agrandissements 8.1, 8.2 rendent un assemblage du tableau de bord plus facile et plus efficace car l'aiguille 2 peut être enfilée facilement à travers le premier agrandissement 8.1 de la boîte à lumière 3 et, le cas échéant, aussi à travers le deuxième agrandissement 8.2 de la carte imprimée 6. La réalisation de cet enfilage de l'aiguille 2 à travers au moins la boîte à lumière 3 ne requiert pas des mouvements spéciaux car les agrandissements 8.1, 8.2 fournissent une ouverture plus grande et ainsi le risque est réduit que l'aiguille est endommagée pendant l'opération d'assemblage du tableau de bord. Par ailleurs, la forme initiale de la boîte à lumière 3 et de la carte imprimée 6 peut être conservée, ce qui permet une fabrication efficace du tableau de bord.

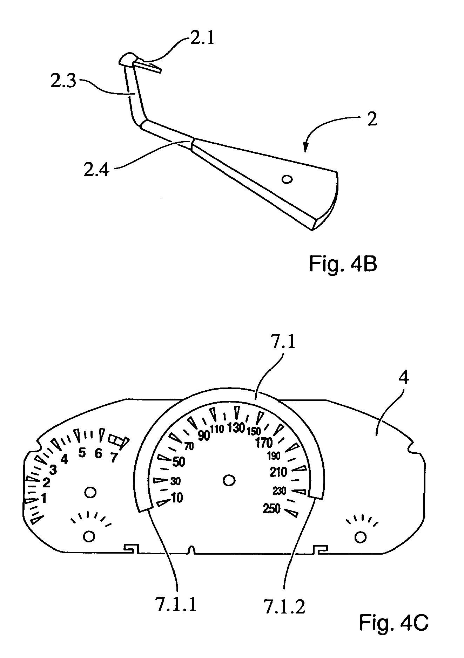

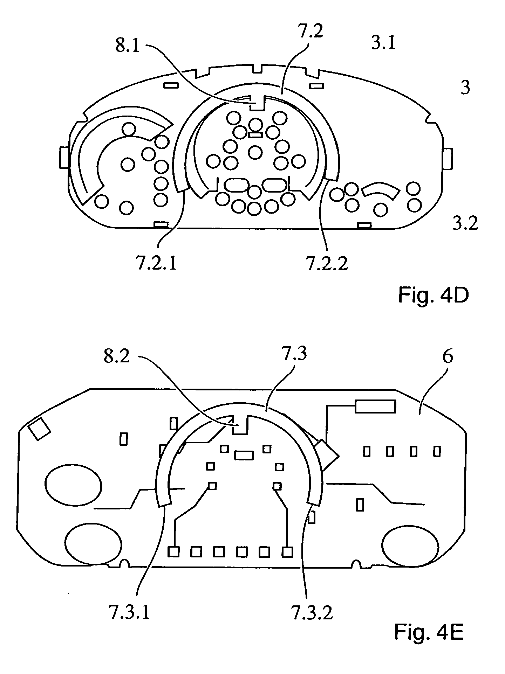

Les figures 4A à 4E montrent le tableau de bord en partie dans son état assemblé ainsi que le cadran 4, la boîte à lumière 3 et la carte imprimée 6 dans une réalisation alternative par rapport à la réalisation montrée dans les figures 3A à 3E. L'aiguille de la figure 4B correspond à l'aiguille 2 représentée dans les figures 1 B, 2B et 3B.

Les agrandissements 8.1, 8.2 sont prévus de telle sorte que seulement le bord radialement intérieur du deuxième évidement 7.2 et, le cas échéant, du troisième évidement 7.3 est modifié. Cela veut dire, que les agrandissements 8.1, 8.2 correspondant à la deuxième alternative de réalisation de la présente invention sont orientés vers le centre, c'est-à-dire vers l'axe de rotation 2.5 et non plus vers l'extérieur, c'est-à-dire radialement vers la périphérie du cadran 4 et de la boîte à lumière 3. Le bord radialement extérieur du deuxième et troisième évidement 7.2, 7.3 est inchangé par le premier et le deuxième agrandissement 8.1, 8.2.

### Liste des signes de référence

- 1: tableau de bord
- 2: aiguille
- 2.1: portion d'affichage
- 2.2: première portion axiale
- 2.3: deuxième portion axiale
- 2.4: portion radiale
- 2.5: axe de rotation
- 3: boîte à lumière
- 3.1: élément d'attachement
- 3.2: exclusions ou évidements pour positionnement des sources de lumière
- 4: cadran
- 5: élément moteur
- 6: carte imprimée
- 7.1: premier évidement
- 7.2: deuxième évidement
- 7.3: troisième évidement
- 7.1.1: premier boutoir du premier évidement
- 7.1.2: deuxième boutoir du premier évidement
- 7.2.1: premier boutoir du deuxième évidement
- 7.2.2: deuxième boutoir du deuxième évidement
- 7.3.1: premier boutoir du troisième évidement
- 7.3.2: deuxième boutoir du troisième évidement
- 8.1: premier agrandissement
- 8.2: deuxième agrandissement

## Revendications

1. Tableau de bord pour véhicules automobiles, comprenant
-- un cadran (4),
-- une boîte à lumière (3)
-- une aiguille (2), et
-- une carte imprimée (6),
l'aiguille étant entrainée en rotation, par un élément moteur (5), derrière le cadran (4) et autour d'un axe de rotation (2.5), l'aiguille (2) comportant une première portion axiale (2.2), une deuxième portion axiale (2.3), une portion radiale (2.4), et une portion d'affichage (2.1), la portion d'affichage (2.1) étant visible en périphérie du cadran (4),
le cadran (4) comprenant un premier évidement (7.1) à travers lequel l'aiguille (2) est enfilée,
la boîte à lumière (3) comprenant un deuxième évidement (7.2) à travers lequel l'aiguille (2) est enfilée,
le tableau de bord comprenant une surface d'affichage d'un côté de la carte imprimée (6) et que l'élément moteur (5) est fixé sur la carte imprimée (6) de l'autre côté de la carte imprimée (6), et
la carte imprimée (6) comprend un troisième évidement (7.3) à travers lequel l'aiguille (2) est enfilée, **caracterisé en ce que** les premier, deuxième et troisième évidements (7.1, 7.2, 7.3) ont une forme étendue et courbée, coaxiale à l'axe de rotation, et sont localisés à une distance de l'axe de rotation (2.5) qui correspond à la longueur de la portion radiale (2.4) de l'aiguille (2).

2. Tableau de bord (1) selon la revendication 1, **caractérisé en ce que**, dans une direction radiale par rapport à l'axe de rotation (2.5), la taille du premier évidement (7.1) est constante le long du premier évidement (7.1) sur au moins 80% de l'extension du premier évidement (7.1), que, dans une direction radiale par rapport à l'axe de rotation (2.5), la taille du deuxième évidement (7.2) est constante le long du deuxième évidement (7.2) sur au moins 80% de l'extension du deuxième évidement (7.2), et/ou que, dans une direction radiale par rapport à l'axe de rotation (2), la taille du troisième évidement (7.3) est constante le long du troisième évidement (7.3) sur au moins 80% de l'extension du troisième évidement (7.3).

3. Tableau de bord (1) selon l'une quelconque des revendications précédentes, **caractérisé en ce que** le deuxième évidement (7.2) comprend, le long de l'extension principale du deuxième évidement (7.2), un premier agrandissement (8.1), le deuxième évidement (7.2) ayant, à l'endroit du premier agrandissement (8.1), une taille agrandie dans une direction radiale par rapport à l'axe de rotation (2.5).

4. Tableau de bord (1) selon l'une quelconque des revendications précédentes, **caractérisé en ce que** le troisième évidement (7.3) comprend, le long de l'extension principale du troisième évidement (7.3), un deuxième agrandissement (8.2), le troisième évidement (7.3) ayant, à l'endroit du deuxième agrandissement (8.2), une taille agrandie dans une direction radiale par rapport à l'axe de rotation (2.5).

5. Tableau de bord (1) selon l'une quelconque des revendications précédentes, **caractérisé en ce que** le deuxième évidement (7.2) comprend un bord radialement intérieur et un bord radialement extérieur, et que le premier agrandissement (8.1) élargit le bord radialement extérieur du deuxième évidement (7.2) et/ou le bord radialement intérieur du deuxième évidement (7.2).

6. Tableau de bord (1) selon l'une quelconque des revendications précédentes, **caractérisé en ce que** le troisième évidement (7.3) comprend un bord radialement intérieur et un bord radialement extérieur, et que le deuxième agrandissement (8.2) élargit le bord radialement extérieur du troisième évidement (7.3) et/ou le bord radialement intérieur du troisième évidement (7.3).

7. Tableau de bord (1) selon l'une quelconque des revendications précédentes, **caractérisé en ce que** l'aiguille (2) comprend un contrepoids.

8. Méthode d'assemblage d'un tableau de bord pour véhicules automobiles selon la revendication 1 le tableau
de bord comprenant
-- un cadran (4),
-- une boîte à lumière (3)
-- une aiguille (2), et
-- une carte imprimée (6),
l'aiguille étant entrainée en rotation, par un élément moteur (5), derrière le cadran (4) et autour d'un axe de rotation, l'aiguille comportant une première portion axiale (2.2), une deuxième portion axiale (2.3), une portion radiale (2.4), et une portion d'affichage (2.1), la portion d'affichage (2.1) étant visible en périphérie du cadran (4), **caractérisé en ce que** le cadran (4) comprend un premier évidement (7.1) et que la boîte à lumière (3) comprend un deuxième évidement (7.2), les premier et deuxième évidements (7.1, 7.2) ayant une forme étendue et courbée, coaxiale à l'axe de rotation (2.5), et étant localisés à une distance de l'axe de rotation qui correspond à la longueur de la portion radiale (2.4) de l'aiguille (2),
la méthode d'assemblage comprenant une étape pendant laquelle l'aiguille (2) est enfilée à travers le premier évidement (7.1) et à travers le deuxième évidement (7.2).

## Patentansprüche

1. Armaturenbrett für Kraftfahrzeuge, umfassend:
- eine Skala (4),
- eine Leuchtbox (3),
- eine Zeigernadel (2) und
- eine Leiterplatte (6),
wobei die Zeigernadel, durch ein Antriebselement (5), hinter der Skala (4) und um eine Drehachse (2.5) zur Drehung angetrieben wird, wobei die Zeigernadel (2) einen ersten axialen Teil (2.2), einen zweiten axialen Teil (2.3), einen radialen Teil (2.4) und einen Anzeigeteil (2.1) aufweist, wobei der Anzeigeteil (2.1) am Umfang der Skala (4) sichtbar ist, wobei die Skala (4) eine erste Ausnehmung (7.1) aufweist, durch die hindurch die Zeigernadel (2) aufgesteckt ist,
wobei die Leuchtbox (3) eine zweite Ausnehmung (7.2) aufweist, durch die hindurch die Zeigernadel (2) aufgesteckt ist,
wobei das Armaturenbrett eine Anzeigefläche auf einer Seite der Leiterplatte (6) umfasst und wobei das Antriebselement (5) auf der Leiterplatte (6) auf der anderen Seite der Leiterplatte (6) befestigt ist, und
die Leiterplatte (6) eine dritte Ausnehmung (7.3) aufweist, durch die hindurch die Zeigernadel (2) aufgesteckt ist,
**dadurch gekennzeichnet, dass** die erste, zweite und dritte Ausnehmung (7.1, 7.2, 7.3) eine ausgeweitete und gekrümmte Form haben, die zu der Drehachse koaxial ist, und in einem Abstand zu der Drehachse (2.5) angeordnet sind, welcher der Länge des radialen Teils (2.4) der Zeigernadel (2) entspricht.

2. Armaturenbrett (1) nach Anspruch 1, **dadurch gekennzeichnet, dass**, in einer relativ zu der Drehachse (2.5) radialen Richtung, die Größe der ersten Ausnehmung (7.1) entlang der ersten Ausnehmung (7.1) über mindestens 80 % der Ausdehnung der ersten Ausnehmung (7.1) konstant ist, dass, in einer relativ zu der Drehachse (2.5) radialen Richtung, die Größe der zweiten Ausnehmung (7.2) entlang der zweiten Ausnehmung (7.2) über mindestens 80 % der Ausdehnung der zweiten Ausnehmung (7.2) konstant ist und/oder dass, in einer relativ zu der Drehachse (2.5) radialen Richtung, die Größe der dritten Ausnehmung (7.3) entlang der dritten Ausnehmung (7.3) über mindestens 80 % der Ausdehnung der dritten Ausnehmung (7.3) konstant ist.

3. Armaturenbrett (1) nach einem der vorhergehenden Ansprüche, **dadurch gekennzeichnet, dass** die zweite Ausnehmung (7.2), entlang der Hauptausdehnung der zweiten Ausnehmung (7.2), eine erste Erweiterung (8.1) umfasst, wobei die zweite Ausnehmung (7.2), an der Stelle der ersten Erweiterung (8.1), eine Größe hat, die in einer relativ zu der Drehachse (2.5) radialen Richtung, erweitert ist.

4. Armaturenbrett (1) nach einem der vorhergehenden Ansprüche, **dadurch gekennzeichnet, dass** die dritte Ausnehmung (7.3), entlang der Hauptausdehnung der dritten Ausnehmung (7.3), eine zweite Erweiterung (8.2) umfasst, wobei die dritte Ausnehmung (7.3), an der Stelle der zweiten Erweiterung (8.2), eine Größe hat, die in einer relativ zu der Drehachse (2.5) radialen Richtung, erweitert ist.

5. Armaturenbrett (1) nach einem der vorhergehenden Ansprüche, **dadurch gekennzeichnet, dass** die zweite Ausnehmung (7.2) einen in radialer Richtung inneren Rand und einen in radialer Richtung äußeren Rand umfasst und dass die erste Erweiterung (8.1) den in radialer Richtung äußeren Rand der zweiten Ausnehmung (7.2) und/oder den in radialer Richtung inneren Rand der zweiten Ausnehmung (7.2) aufweitet.

6. Armaturenbrett (1) nach einem der vorhergehenden Ansprüche, **dadurch gekennzeichnet, dass** die dritte Ausnehmung (7.3) einen in radialer Richtung inneren Rand und einen in radialer Richtung äußeren Rand umfasst und dass die zweite Erweiterung (8.2) den in radialer Richtung äußeren Rand der dritten Ausnehmung (7.3) und/oder den in radialer Richtung inneren Rand der dritten Ausnehmung (7.3) aufweitet.

7. Armaturenbrett (1) nach einem der vorhergehenden Ansprüche, **dadurch gekennzeichnet, dass** die Zeigernadel (2) ein Gegengewicht umfasst.

8. Verfahren zur Montage eines Armaturenbretts für Kraftfahrzeuge nach Anspruch 1, wobei das Armaturenbrett Folgendes umfasst:
- eine Skala (4),
- eine Leuchtbox (3),
- eine Zeigernadel (2) und
- eine Leiterplatte (6),
wobei die Zeigernadel, durch ein Antriebselement (5), hinter der Skala (4) und um eine Drehachse zur Drehung angetrieben wird, wobei die Zeigernadel einen ersten axialen Teil (2.2), einen zweiten axialen Teil (2.3), einen radialen Teil (2.4) und einen Anzeigeteil (2.1) aufweist, wobei der Anzeigeteil (2.1) am Umfang der Skala (4) sichtbar ist,
**dadurch gekennzeichnet, dass** die Skala (4) eine erste Ausnehmung (7.1) umfasst und dass die Leuchtbox (3) eine zweite Ausnehmung (7.2) umfasst, wobei die erste und die zweite Ausnehmung (7.1, 7.2) eine ausgeweitete und gekrümmte Form haben, die zu der Drehachse (2.5) koaxial ist, und in einem Abstand zu der Drehachse angeordnet sind, welcher der Länge des radialen Teils (2.4) der Zeigernadel (2) entspricht,
wobei das Montageverfahren einen Schritt umfasst, während dessen die Zeigernadel (2) durch die erste Ausnehmung (7.1) hindurch und durch die zweite Ausnehmung (7.2) hindurch aufgesteckt wird.

## Claims

1. Dashboard for motor vehicles, comprising
- a dial (4),
- a light box (3),
- a needle (2), and
- a printed circuit board (6),
the needle being driven in rotation, by a motor element (5), behind the dial (4) and about an axis of rotation (2.5), the needle (2) comprising a first axial portion (2.2), a second axial portion (2.3), a radial portion (2.4), and a display portion (2.1), the display portion (2.1) being visible at the edge of the dial (4), the dial (4) comprising a first clearance (7.1) through which the needle (2) is threaded,
the light box (3) comprising a second clearance (7.2) through which the needle (2) is threaded,
the dashboard comprising a display surface on one side of the printed circuit board (6) and the motor element (5) being fixed to the printed circuit board (6) on the other side of the printed circuit board (6), and
the printed circuit board (6) comprising a third clearance (7.3) through which the needle (2) is threaded,
**characterised in that** the first, second and third clearances (7.1, 7.2, 7.3) are of an elongate curved shape, which is coaxial with the axis of rotation, and are located at a distance from the axis of rotation (2.5) which corresponds to the length of the radial portion (2.4) of the needle (2).

2. Dashboard (1) according to claim 1, **characterised in that**, in a radial direction with respect to the axis of rotation (2.5), the size of the first clearance (7.1) is constant along the first clearance (7.1) over at least 80 % of the extension of the first clearance (7.1), **in that**, in a radial direction with respect to the axis of rotation (2.5), the size of the second clearance (7.2) is constant along the second clearance (7.2) over at least 80 % of the extension of the second clearance (7.2), and/or **in that**, in a radial direction with respect to the axis of rotation (2.5), the size of the third clearance (7.3) is constant along the third clearance (7.3) over at least 80 % of the extension of the third clearance (7.3).

3. Dashboard (1) according to any of the preceding claims, **characterised in that** the second clearance (7.2) comprises, along the length of the primary extension of the second clearance (7.2), a first enlargement (8.1), the second clearance (7.2) having, at the position of the first enlargement (8.1), an enlarged size in a radial direction with respect to the axis of rotation (2.5).

4. Dashboard (1) according to any of the preceding claims, **characterised in that** the third clearance (7.3) comprises, along the primary extension of the third clearance (7.3), a second enlargement (8.2), the third clearance (7.3) having, at the position of the second enlargement (8.2), an enlarged size in a radial direction with respect to the axis of rotation (2.5).

5. Dashboard (1) according to any of the preceding claims, **characterised in that** the second clearance (7.2) comprises a radially internal edge and a radially external edge and **in that** the first enlargement (8.1) enlarges the radially external edge of the second clearance (7.2) and/or the radially internal edge of the second clearance (7.2).

6. Dashboard (1) according to any of the preceding claims, **characterised in that** the third clearance (7.3) comprises a radially internal edge and a radially external edge and **in that** the second enlargement (8.2) enlarges the radially external edge of the third clearance (7.3) and/or the radially internal edge of the third clearance (7.3).

7. Dashboard (1) according to any of the preceding claims, **characterised in that** the needle (2) comprises a counterweight.

8. Method for assembling a dashboard for motor vehicles according to claim 1, the dashboard comprising
- a dial (4)
- a light box (3)
- a needle (2), and
- a printed circuit board (6),
the needle being driven in rotation, by a motor element (5), behind the dial (4) and about an axis of rotation (2.5), the needle comprising a first axial portion (2.2), a second axial portion (2.3), a radial portion (2.4), and a display portion (2.1), the display portion (2.1) being visible at the edge of the dial (4),
**characterised in that** the dial (4) comprises a first clearance (7.1) and **in that** the light box (3) comprises a second clearance (7.2), the first and second clearances (7.1, 7.2) being of an elongate curved shape, which is coaxial with the axis of rotation (2.5), and being located at a distance from the axis of rotation which corresponds to the length of the radial portion (2.4) of the needle (2),
the assembly method comprising a step in which the needle (2) is threaded through the first clearance (7.1) and through the second clearance (7.2).
